Europäisches Patentamt

European Patent Office

Office européen des brevets

(19)

(11) Numéro de publication : **0 378 493 B1**

# (12) FASCICULE DE BREVET EUROPEEN

(45) Date de publication du fascicule du brevet :
**01.04.92 Bulletin 92/14**

(51) Int. Cl.⁵ : **F16L 19/02**

(21) Numéro de dépôt : **90420015.1**

(22) Date de dépôt : **10.01.90**

(54) **Dispositif de raccordement à joint d'étanchéité pour éléments tubulaires.**

(30) Priorité : **12.01.89 FR 8900630**

(43) Date de publication de la demande :
**18.07.90 Bulletin 90/29**

(45) Mention de la délivrance du brevet :
**01.04.92 Bulletin 92/14**

(84) Etats contractants désignés :
**DE GB**

(56) Documents cités :
**EP-A- 0 124 429**
**DE-A- 2 553 058**

(56) Documents cités :
**DE-C- 369 798**
**US-A- 1 242 568**
**US-A- 1 537 755**
**US-A- 3 482 860**

(73) Titulaire : **Desbiolles, Christian**
**113 Chemin de la Coudre**
**F-74460 Marnaz (FR)**

(72) Inventeur : **Desbiolles, Christian**
**113 Chemin de la Coudre**
**F-74460 Marnaz (FR)**

(74) Mandataire : **de Beaumont, Michel**
**Cabinet Poncet 7, chemin de Tillier B.P. 317**
**F-74008 Annecy Cédex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne les dispositifs permettant le raccordement étanche entre deux éléments tubulaires.

L'invention concerne plus particulièrement de tels dispositifs de raccordement utilisés dans les industries des semi-conducteurs, de la cryogénie et de la fibre optique.

Dans ces industries, on est conduit à utiliser des gaz très purs qu'il faut amener sur les lieux d'utilisation par des canalisations. Les canalisations contiennent un grand nombre de raccords, permettant leur montage, et leur démontage pour changement ou réparation. Les éléments tubulaires eux-mêmes présentent une surface intérieure dont la finition est très soignée, pour éviter toute présence de particules d'impuretés qui seraient ensuite entraînées par les gaz et provoqueraient leur souillure.

Les dispositifs de raccordement pour les éléments tubulaires successifs sont également réalisés de manière soignée, pour présenter des surfaces exemptes de particules risquant de se détacher et d'être entraînées par les gaz conduits dans les canalisations.

Le demandeur a cependant constaté que, dans les installations de conduites de gaz purs connues, le taux d'impureté des gaz en sortie des canalisations présente parfois une augmentation momentanée très importante, rendant l'installation momentanément inadaptée pour l'usage qui est prévu. L'analyse minutieuse de ces phénomènes perturbateurs a montré que, au cours de l'utilisation de l'installation, les rares impuretés contenues dans les gaz se déposent progressivement dans des interstices des canalisations, et en particulier dans les interstices que l'on rencontre habituellement dans les dispositifs de raccordement connus. Périodiquement, les impuretés accumulées dans ces interstices se détachent et sont entraînées dans le gaz, provoquant une augmentation très sensible du taux d'impureté.

Un tel défaut peut être constaté par exemple lorsque l'on utilise un raccord tel que décrit dans le document DE-C- 369 798. En effet, le dispositif de raccordement décrit dans ce document comprend notamment un joint annulaire plat limité par deux faces radiales planes parallèles destinées à être serrées entre deux faces de raccordement d'éléments tubulaires, par serrage axial au moyen d'une douille de serrage. Le joint est limité par un bord intérieur cylindrique dont le diamètre est supérieur au diamètre de l'alésage intérieur axial des éléments tubulaires. En position de raccordement, une gorge annulaire est réalisée entre les deux faces de raccordement des éléments tubulaires et le bord intérieur cylindrique du joint d'étanchéité. Les impuretés peuvent s'accumuler dans cette gorge annulaire, et se détacher ensuite pour être entraînées dans le gaz.

La présente invention a notamment pour objet d'éviter les inconvénients des dispositifs de raccordement connus, en proposant une nouvelle structure dans laquelle on réduit très sensiblement le volume des cavités dans lesquelles risquent de se déposer des impuretés véhiculées par les gaz passant dans les canalisations. En outre, les impuretés éventuellement véhiculées qui pourraient encore se déposer dans les interstices restants n'ont pratiquement aucune chance de se détacher et de sortir des interstices pour être entraînées ensuite par le gaz véhiculé.

Un autre objet de l'invention est de proposer une telle nouvelle structure de dispositif de raccordement autorisant le désassemblage et l'assemblage de deux éléments tubulaires successifs par déplacement relatif latéral des éléments tubulaires l'un par rapport à l'autre. On conçoit qu'un tel accouplement et désaccouplement par déplacement latéral est rendu indispensable pour permettre le montage et le démontage d'éléments tubulaires intermédiaires dans une installation déjà construite, tout déplacement axial étant alors pratiquement impossible. On connaît par exemple des structures de raccordement telles que décrites dans le document EP-A-0 124 429, dans lesquelles l'un des deux éléments tubulaires comprend, sur sa face de raccordement, une nervure intérieure coaxiale, prolongeant axialement la paroi de l'alésage intérieur en direction de l'autre des deux éléments tubulaires. La longeur de cette nervure intérieure coaxiale est supérieure à l'épaisseur du joint d'étanchéité, et son extrémité s'engage dans un évidement correspondant de l'autre des deux éléments tubulaires. Il en résulte que, en position d'accouplement, tout déplacement relatif latéral d'un élément tubulaire par rapport à l'autre est rendu impossible par l'encastrement de la nervure intérieure coaxiale dans l'évidement de l'autre des deux éléments tubulaires. L'accouplement et le désaccouplement nécessitent un déplacement relatif axial des éléments tubulaires l'un par rapport à l'autre, ce que la présente invention permet d'éviter.

Ainsi, la structure de raccord selon l'invention présente les avantages recherchés d'un faible volume d'interstices, tout en permettant l'assemblage et le désassemblage par translation latérale relative des éléments tubulaires l'un par rapport à l'autre.

Selon un autre objet de l'invention, la structure de dispositif de raccordement comprend des moyens pour assurer le maintien du joint d'étanchéité pendant la translation relative transversale des éléments tubulaires l'un par rapport à l'autre lors d'une opération d'assemblage ou de désassemblage.

Selon un autre avantage de l'invention, la structure permet le centrage automatique et permanent du joint d'étanchéité par rapport à l'axe longitudinal des éléments tubulaires à raccorder.

Pour atteindre ces objets ainsi que d'autres, l'invention propose un dispositif de raccordement selon la revendication 1.

Selon un mode de réalisation, le second élément tubulaire est en deux parties, et comprend :

– un corps tubulaire comportant la face frontale et le cylindre périphérique de centrage, ledit cylindre périphérique de centrage se raccordant à un épaulement périphérique extérieur qui se raccorde lui-même à une partie cylindrique coaxiale de diamètre inférieur,

– une deuxième douille de serrage à alésage intérieur axial s'adaptant sur la partie cylindrique extérieure coaxiale du corps de second élément tubulaire, la deuxième douille présentant une face frontale destinée à porter sur l'épaulement périphérique extérieur du second élément tubulaire et comportant la surface extérieure cylindrique filetée, la deuxième douille étant munie d'une seconde extrémité conformée pour permettre sa préhension et son actionnement en rotation.

Selon un mode de réalisation, la différence entre l'épaisseur du joint et la longueur de la nervure intérieure coaxiale est comprise entre 0,03 et 0,08 mm. Ainsi, l'interstice restant entre le bord extrême de la nervure intérieure coaxiale et la face de raccordement du second élément tubulaire, lorsque les deux éléments tubulaires sont raccordés, est limité à un minimum, tout en restant compatible avec des tolérances d'épaisseur de joint raisonnables. Le volume de l'interstice ainsi réservé est également limité à son minimum.

De préférence, des nervures intermédiaires circulaires co-axiales sont prévues sur les faces frontales des éléments tubulaires, présentant des diamètres intermédiaires entre le diamètre extérieur des cylindres périphériques de centrage et le diamètre des alésages intérieurs des éléments tubulaires.

Selon un mode de réalisation avantageux, les nervures intermédiaires respectives de deux éléments tubulaires successifs ont le même diamètre.

Les hauteurs des nervures intermédiaires sont avantageusement égales à 0,25 mm environ, pour utilisation avec un joint métallique, et les nervures ne sont pas coupantes.

Selon un mode de réalisation avantageux, le diamètre intérieur du joint est seulement très peu supérieur au diamètre extérieur de la nervure intérieure coaxiale. De cette manière, le joint se trouve centré par la nervure intérieure coaxiale qu'il entoure.

D'autres objets, caractéristiques et avantages de la présente invention ressortiront de la description suivante de modes de réalisations particuliers, faite en relation avec les figures jointes, parmi lesquelles :

– la figure 1 est une demi-coupe longitudinale d'un dispositif de raccordement selon un premier mode de réalisation de l'invention avant montage ;

– la figure 2 représente le dispositif de la figure 1 après montage ; et

– la figure 3 représente en coupe longitudinale un dispositif de raccordement selon un second mode de réalisation.

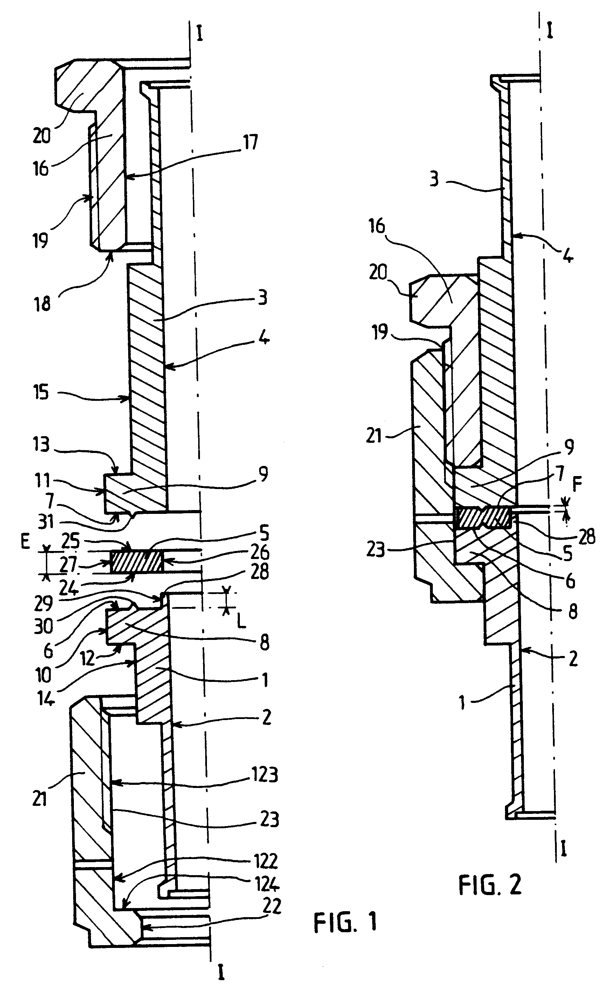

Dans le mode de réalisation représenté sur les figures 1 et 2, la structure de raccordement selon l'invention comprend un premier élément tubulaire 1 à alésage 2 longitudinal, et un second élément tubulaire 3 à alésage 4 longitudinal. Les deux éléments tubulaires 1 et 3 sont destinés à être raccordés bout à bout et de façon coaxiale selon leurs extrémités de raccordement respectives, avec interposition du joint annulaire 5 plat d'étanchéité. Par exemple, chaque élément tubulaire 1 et 3 est un embout destiné à être soudé à l'extrémité d'un tube.

Chaque élément tubulaire 1 et 3 comprend respectivement une face frontale 6 et 7, sensiblement perpendiculaire à l'axe longitudinal I-I, et formant portée pour le joint d'étanchéité 5. Les faces frontales respectives 6 et 7 se raccordent respectivement à des cylindres périphériques de centrage 8 et 9 coaxiaux. Chaque cylindre périphérique 8 et 9 est limité par la face frontale respective 6 et 7, par une face latérale extérieure cylindrique respectivement 10 et 11, et par un épaulement respectif 12 et 13 opposé à ladite face frontale respective 6 et 7. Les épaulements 12 et 13 se raccordent respectivement à des parties cylindriques extérieures coaxiales 14 et 15 d'éléments tubulaires.

Une première douille de serrage 21 comprend un premier alésage intérieur 22 de grand diamètre et un second alésage intérieur 23 de plus petit diamètre successifs et coaxiaux. Le diamètre du second alésage intérieur 23 permet l'adaptation à faible jeu sur les faces latérales extérieures cylindriques 10 et 11 des cylindres périphériques de centrage 8 et 9. Les alésages intérieurs 22 et 23 sont séparés par une face de raccordement radiale 124 destinée à porter contre l'épaulement périphérique 12 du premier élément tubulaire 1. Le second alésage 23 axial comporte une portion lisse 122 et une portion taraudée 123 comme représenté sur les figures. La portion lisse 122 a une longueur au moins égale à la somme des longueurs des cylindres périphériques de centrage 8 et 9 et du joint d'étanchéité 5.

Une seconde douille de serrage 16, à alésage axial 17, s'adapte sur la partie cylindrique extérieure coaxiale 15 du second élément tubulaire 3. La seconde douille 16 comprend une face frontale 18 destinée à porter contre l'épaulement périphérique 13 du second élément tubulaire 3, et elle comprend une surface extérieure cylindrique 19 filetée, de diamètre extérieur plus grand que le diamètre extérieur des cylindres périphériques de centrage 8 et 9, pour coopérer par vissage avec la portion taraudée 123 de la première douille de serrage 21. La seconde extrémité de la seconde douille 16, opposée à la face frontale 18, comporte une excroissance radiale périphérique 20 conformée pour permettre la préhension de la seconde douille et son actionnement en rotation pour serrage.

Le joint d'étanchéité 5 est de type joint annulaire plat, limité par deux faces radiales planes parallèles 24 et 25 destinées à être serrées entre les deux faces de raccordement frontales 6 et 7 des éléments tubulaires. Le joint 5 est en outre limité par un bord intérieur cylindrique 26 de diamètre supérieur au diamètre de l'alésage intérieur axial 2 ou 4 des éléments tubulaires, et est limité par un bord extérieur cylindrique 27 dont le diamètre est inférieur au diamètre du second alésage 23 de la première douille 21.

L'un des deux éléments tubulaires 1 ou 3, par exemple le premier élément tubulaire 1, comprend, sur sa face de raccordement 6, une nervure intérieure coaxiale 28 prolongeant axialement la paroi de l'alésage intérieur 2 en direction du second élément tubulaire 3. La longueur L de la nervure intérieure coaxiale 28 est constante selon tout son pourtour et légèrement inférieure à l'épaisseur E du joint annulaire plat 5. La nervure intérieure coaxiale 28 est limitée par une face cylindrique extérieure 29 de révolution, dont le diamètre est inférieur au diamètre du bord intérieur 26 cylindrique du joint, et par une face cylindrique intérieure de révolution prolongeant de manière continue l'alésage intérieur 2. La face de raccordement 7 de l'autre des deux éléments tubulaires 1 ou 3 est sensiblement plane, pour permettre la translation transversale libre dudit autre élément tubulaire 3 par rapport au premier élément tubulaire 1 muni de la nervure intérieure coaxiale 28.

De préférence, la différence entre l'épaisseur E du joint et la longueur L de la nervure intérieure coaxiale 28 est comprise entre 0,03 et 0,08 mm.

Les faces frontales 6 et 7, dans le mode de réalisation représenté, comprennent en outre des nervures intermédiaires respectives 30 et 31 circulaires coaxiales, dont le diamètre est intermédiaire entre le diamètre de l'alésage intérieur 2 ou 4 des éléments tubulaires et le diamètre des cylindres périphériques de centrage 8 et 9 des éléments tubulaires. Pour une utilisation avec un joint métallique, ces nervures intermédiaires 30 et 31 présentent avantageusement une hauteur de 0,25 mm environ, et leur section est généralement triangulaire à sommet arrondi pour éviter d'être coupante. Les nervures intermédiaires 30 et 31 présentent avantageusement le même diamètre. Pour des joints 5 en d'autres matières, on choisit la hauteur des nervures intermédiaires 30 et 31 de façon que, en fin de serrage, les faces frontales 6 et 7 viennent juste en appui sur les parties planes des faces radiales 24 et 25 du joint 5 après pénétration des nervures intermédiaires 30 et 31 dans le joint.

De préférence, le diamètre intérieur du joint 5, ou diamètre du bord intérieur cylindrique 26, est seulement très peu supérieur au diamètre extérieur de la nervure intérieure 28, ou diamètre de la face périphérique extérieure 29. De cette manière, le bord intérieur cylindrique 26 du joint 5 s'adapte à faible jeu sur la face périphérique extérieure 29 de la nervure intérieure 28.

Les longueurs des alésages de douilles et des surfaces périphériques respectives des éléments tubulaires sont choisies, comme le représentent les figures, pour que, en position de raccordement représentée sur la figure 2, le joint 5 soit écrasé entre les faces frontales 6 et 7 des éléments tubulaires. Les nervures intermédiaires 30 et 31 s'incrustent dans les faces radiales 24 et 25 du joint 5, les faces frontales 6 et 7 venant porter en appui contre le joint 5. Dans cette position d'assemblage, il reste une fente F entre le bord de l'alésage intérieur 2 et le bord de l'alésage intérieur 4 des éléments tubulaires, la largeur de la fente F étant comprise entre 0,03 et 0,08 mm. La profondeur de la fente est égale à l'épaisseur de la nervure coaxiale intérieure 28, qui peut être très faible.

Dans la position de raccordement représentée sur la figure 2, la face de raccordement radiale 124 de la première douille 21 porte contre l'épaulement 12 du premier élément tubulaire 1, et la face frontale 18 de la seconde douille 16 porte contre l'épaulement 13 du second élément tubulaire 3. Par vissage des douilles 16 et 21 l'une par rapport à l'autre, on rapproche les douilles l'une de l'autre et on rapproche les deux éléments tubulaires l'un de l'autre en comprimant le joint 5 interposé. Le joint 5 fait lui-même office de butée limitant le serrage des douilles.

Le joint 5 peut avantageusement être réalisé en nickel argenté. D'autres matières peuvent toutefois être utilisées, en harmonie avec le fluide véhiculé et la matière formant les éléments tubulaires.

L'alignement de l'ensemble est assuré par la qualité de l'alésage 23 de la première douille 21 et par la précision du diamètre extérieur des cylindres périphériques 8 et 9. Cet alignement est nécessaire pour éviter l'apparition d'une discontinuité et d'une marche d'escalier entre les alésages intérieurs 2 et 4, en position de raccordement. En position de raccordement représentée sur la figure 2, la portion lisse 122 du second alésage 23 de première douille 21 porte simultanément sur l'une et l'autre des surfaces périphériques 10 et 11 des cylindres périphériques de centrage 8 et 9. Par le fait que la portion lisse 122 s'adapte à faible jeu sur les cylindres périphériques 8 et 9, il en résulte le centrage et l'alignement des éléments tubulaires 1 et 3 l'un par rapport à l'autre. On peut par exemple réaliser un alignement selon une précision de 5 centièmes de mm environ.

Lorsque les douilles 21 et 16 sont dévissées, comme le représente la figure 1, même lorsque les éléments tubulaires 1 et 3 sont rapprochés l'un de l'autre, on peut sans difficultés décaler latéralement les éléments tubulaires l'un par rapport à l'autre, sans avoir à les déplacer axialement. Le joint 5 reste en effet dans le logement défini par la nervure intérieure coaxiale 28 et la face frontale 6 du premier élément tubulaire 1. Tout au plus faut-il déplacer légèrement le second élément tubulaire 3 axialement pour sortir la nervure intermédiaire 31 hors de la rainure qu'elle a imprimée dans la face 25 du joint 5.

Dans le mode de réalisation des figures 1 et 2, le second élément tubulaire est constitué de deux pièces s'adaptant l'une sur l'autre, à savoir le corps 3 de l'élément tubulaire et la seconde douille 16 de serrage.

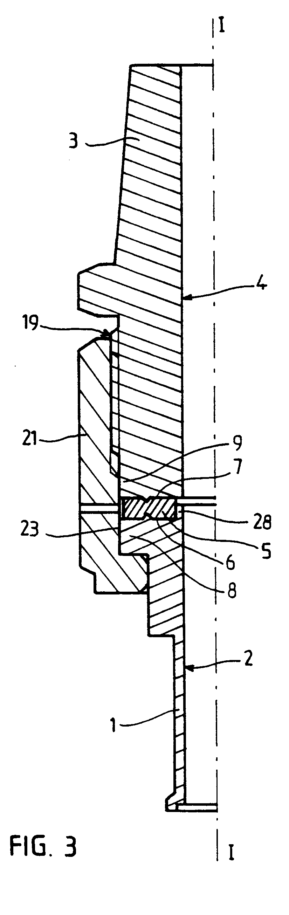

Dans le mode de réalisation de la figure 3, le second élément tubulaire 3 est monobloc et équivalent à l'ensemble formé par le corps d'élément tubulaire et sa seconde douille de serrage 16 en position de blocage, c'est-à-dire lorsque la face frontale 18 de douille est en appui contre l'épaulement 13 du corps. Il comprend les mêmes formes fonctionnelles que dans le mode de réalisation précédent, à savoir : la face frontale 7, le cylindre périphérique de centrage 9 limité par sa face extérieure 11, l'alésage intérieur 4, la surface extérieure cylindrique 19 filetée. La surface extérieure cylindrique 19 filetée est alors solidaire du corps 3 du second élément tubulaire.

## Revendications

1. Dispositif de raccordement à joint d'étanchéité pour éléments tubulaires, comprenant :
   – un premier élément tubulaire (1) à alésage (2) longitudinal et un second élément tubulaire (3) à alésage (4) longitudinal, chaque élément tubulaire comprenant une face frontale (6, 7) sensiblement perpendiculaire à l'axe longitudinal (I-I) du dispositif et formant portée de joint, chaque face frontale (6, 7) se raccordant à un cylindre périphérique de centrage (8, 9), les cylindres périphériques de centrage ayant le même diamètre, le cylindre périphérique de centrage (8) du premier élément tubulaire (1) se raccordant à un épaulement périphérique extérieur (12),
   – une surface extérieure cylindrique (19) filetée, de diamètre extérieur plus grand que le diamètre extérieur des cylindres périphériques de centrage (8, 9), ménagée sur le second élément tubulaire (3),
   – une douille de serrage (21) comportant deux alésages intérieurs axiaux successifs (22, 23), les alésages intérieurs axiaux (22, 23) étant séparés par une face de raccordement radiale (124) destinée à porter contre l'épaulement périphérique extérieur (12) du premier élément tubulaire (1), le deuxième alésage axial (23) comportant une portion taraudée (123) coopérant avec la portion filetée (19) du second élément tubulaire,
   – un joint annulaire plat (5) d'épaisseur E limité par deux faces radiales planes parallèles (24, 25) destinées à être serrées entre les deux faces de raccordement (6, 7) des éléments tubulaires par serrage axial au moyen de la douille de serrage (21), le joint (5) étant limité par un bord intérieur cylindrique (26) dont le diamètre est supérieur au diamètre de l'alésage intérieur axial (2, 4) des éléments tubulaires et est limité par un bord extérieur cylindrique (27) dont le diamètre est inférieur au diamètre du second alésage (23) de la douille (21) de serrage,
   – les cylindres périphériques de centrage (8, 9) et les moyens de serrage (21) assurant le maintien transversal des éléments tubulaires selon des positions relatives coaxiales, caractérisé en ce que :
   – l'un des deux éléments tubulaires (1) comprend, sur sa face de raccordement (6), une nervure intérieure coaxiale (28), faisant saillie de ladite face de raccordement (6) axialement en direction de l'autre des deux éléments tubulaires (3),
   – la longueur (L) de la nervure intérieure coaxiale (28) est légèrement inférieure à l'épaisseur (E) du joint annulaire plat (5),
   – un bord du joint annulaire plat (5) s'adapte à faible jeu contre une face cylindrique de la nervure coaxiale (28), de sorte que la nervure coaxiale (28) assure le centrage automatique et permanent du joint annulaire plat (5) par rapport à l'axe longitudinal des éléments tubulaires (1, 3) et assure le maintien du joint annulaire plat (5) pendant les translations relatives transversales des éléments tubulaires (1, 3) l'un par rapport à l'autre.

2. Dispositif de raccordement selon la revendication 1, caractérisé en ce que :
   – la nervure intérieure coaxiale (28) est limitée par une face cylindrique extérieure (29) de révolution dont le diamètre est inférieur au diamètre intérieur (26) du joint (5),
   – le joint (5) s'adapte à faible jeu contre ladite face cylindrique extérieure (29) de nervure.

3. Dispositif de raccordement selon la revendication 2, caractérisé en ce que le diamètre intérieur (26) du joint (5) est seulement très peu supérieur au diamètre extérieur (29) de la nervure intérieure coaxiale (28).

4. Dispositif de raccordement selon l'une quelconque des revendications 1 à 3, caractérisé en ce que le second élément tubulaire comprend :
   – un corps tubulaire comportant la face frontale (7) et le cylindre périphérique de centrage (9), ledit cylindre périphérique de centrage (9) se raccordant à un épaulement périphérique extérieur (13) qui se raccorde lui-même à une partie cylindrique coaxiale (15) de diamètre inférieur,
   – une deuxième douille de serrage (16) à alésage intérieur axial (17) s'adaptant sur la partie cylindrique extérieure coaxiale (15) du corps de second élément tubulaire (3), la deuxième douille présentant une face frontale (18) destinée à porter sur l'épaulement périphérique extérieur (13) du second élément tubulaire (3) et comportant la surface extérieure cylindrique (19) filetée, la deuxième douille étant munie d'une seconde extrémité (20) conformée pour permettre sa préhension et son actionnement en rotation.

5. Dispositif de raccordement selon l'une quelconque des revendications 1 à 4, caractérisé en ce que la différence entre l'épaisseur (E) du joint annulaire plat (5) et la longueur (L) de la nervure intérieure coaxiale (28) est comprise entre 0,03 et 0,08 mm.

6. Dispositif de raccordement selon l'une quelconque des revendications 1 à 5, caractérisé en ce que les faces frontales (6, 7) des éléments tubulaires comprennent des nervures intermédiaires circulaires coaxiales (30, 31) dont le diamètre présente une valeur intermédiaire entre le diamètre des alésages intérieurs (2, 4) des éléments tubulaires et le diamètre extérieur des cylindres périphériques de centrage (8, 9).

7. Dispositif de raccordement selon la revendication 6, caractérisé en ce que les nervures intermédiaires circulaires coaxiales (30, 31) respectives des deux éléments tubulaires (1, 3) ont sensiblement le même diamètre.

8. Dispositif de raccordement selon l'une des revendications 6 ou 7, caractérisé en ce que les nervures intermédiaires circulaires coaxiales (30, 31) respectives ont une hauteur égale à 0,25 mm environ pour utilisation avec un joint métallique.

9. Dispositif de raccordement selon l'une quelconque des revendications 6 à 8, caractérisé en ce que les nervures intermédiaires circulaires coaxiales (30, 31) respectives présentent une section triangulaire à sommet arrondi.

10. Dispositif de raccordement selon l'une quelconque des revendications 1 à 9, caractérisé en ce que les moyens de centrage des éléments tubulaires sont constitués par la douille de serrage (21) dont le second alésage (23) s'adapte à faible jeu sur les faces latérales (10, 11) des cylindres périphériques de centrage (8, 9).

**Patentansprüche**

1. Einrichtung für eine dichte Stoßverbindung von rohrförmigen Bauteilen, bestehend aus:
– einem ersten rohrförmigen Bauteil (1) mit einer Längsbohrung (2) und einem zweiten rohrförmigen Bauteil (3) mit einer Längsbohrung (4), wobei jedes rohrförmige Bauteil eine Stirnfläche (6, 7) aufweist, im wesentlichen senkrecht zu der Längsachse (I-I) der Einrichtung und den Wirkbereich des Stoßes bildend, und wobei jede Stirnfläche (6, 7) sich an einen umlaufenden Zentrierzylinder (8, 9) anschließt, wobei die umlaufenden Zentrierzylinder den gleichen Durchmesser aufweisen und wobei der umlaufende Zentrierzylinder (8) des ersten rohrförmigen Bauteils (1) sich an eine umlaufende Außenschulter (12) anschließt,
– einer mit einem Außengewinde versehenen zylindrischen Außenfläche (19), deren Außendurchmesser größer ist als der Außendurchmesser der umlaufenden Zentrierzylinder (8, 9) und die an dem zweiten rohrförmigen Bauteil (3) vorgesehen ist,
– einer Spannhülse (21), die zwei aufeinanderfolgende axiale Innenbohrungen (22, 23) aufweist, wobei die axialen Innenbohrungen (22, 23) durch eine radiale Anschlußfläche (124) voneinander getrennt sind, die für eine Anlage gegen die umlaufende Außenschulter (12) des ersten rohrförmigen Bauteils (1) bestimmt ist, und wobei die zweite Axialbohrung (23) einen mit einem Innengewinde versehenen Abschnitt (123) aufweist, der mit dem mit einem Außengewinde versehenen Abschnitt (19) des zweiten rohrförmigen Bauteils zusammenwirkt,
– einer flachen Ringdichtung (5) einer Dicke (E), die durch zwei parallele ebene Radialflächen (24, 25) begrenzt ist, welche für ein Verspannen zwischen den beiden Anschlußflächen (6, 7) der rohrförmigen Bauteile durch ein axiales Verspannen mittels der Spannhülse (21) bestimmt sind, wobei die Dichtung (5) durch einen zylindrischen Innenrand (26) begrenzt ist, dessen Durchmesser größer ist als der Durchmesser der axialen Innenbohrung (2, 4) der rohrförmigen Bauteile, und durch einen zylindrischen Außenrand (27) begrenzt ist, dessen Durchmesser kleiner als der Durchmesser der zweiten Bohrung (23) der Spannhülse (21) ist,
– wobei die umlaufenden Zentrierzylinder (8, 9) und die Spannmittel (21) die transversale Beibehaltung der rohrförmigen Bauteile gemäß ihren koaxialen relativen Positionen sicherstellen, dadurch gekennzeichnet, daß
– eines der beiden rohrförmigen Bauteile (1) an seiner Anschlußfläche (6) eine koaxiale Innenrippe (28) aufweist, die über diese Anschlußfläche (6) in Richtung auf das andere der beiden rohrförmigen Bauteile (3) axial vorsteht,
– wobei die Länge (L) der koaxialen Innenrippe (28) etwas kleiner ist als die Dicke (E) der flachen Ringdichtung (5),
– ein Rand der flachen Ringdichtung (5) sich mit kleinem Spiel gegen eine Zylinderfläche der koaxialen Rippe (28) derart anpaßt, daß die koaxiale Rippe (28) die Zentrierung der flachen Ringdichtung (5) in bezug auf die Längsachse der rohrförmigen bauteile (1, 3) automatisch und dauerhaft sicherstellt und die beibehaltung der flachen Ringdichtung (5) während der relativen transversalen Translationen der rohrförmigen bauteile (1, 3) in bezug aufeinander sicherstellt.

2. Verbindungseinrichtung nach Anspruch 1, dadurch gekennzeichnet, daß

– die koaxiale Innenrippe (28) durch eine äußere umlaufende Zylinderfläche (29) begrenzt ist, deren Durchmesser kleiner als der Innendurchmesser (26) der Dichtung (5) ist,

– die Dichtung (5) sich mit schwachem Spiel gegen diese äußere Zylinderfläche (29) der Rippe anpaßt.

3. Verbindungseinrichtung nach Anspruch 2, dadurch gekennzeichnet, daß der Innendurchmesser (26) der Dichtung (5) nur sehr wenig größer als der Außendurchmesser (29) der koaxialen Innenrippe (28) ist.

4. Verbindungseinrichtung nach einem der Ansprüche 1 bis 3, dadurch gekennzeichnet, daß das zweite rohrförmige Bauteil besteht aus:

– einem rohrförmigen Körper, der die Stirnfläche (7) und den umlaufenden Zentrierzylinder (9) umfaßt, wobei sich der umlaufende Zentrierzylinder (9) an eine umlaufende Außenschulter (13) anschließt, die sich ihrerseits an einen koaxialen Zylinderbereich (15) eines kleineren Durchmessers anschließt,

– einer zweiten Spannhülse (16) mit einer axialen Innenbohrung (17), die sich an den koaxialen äußeren Zylinderbereich (15) des Körpers des zweiten rohrförmigen Bauteils (3) anpaßt, wobei die zweite Hülse eine Stirnfläche (18) aufweist, welche zur Anlage an die umlaufende Außenschulter (13) des zweiten rohrförmigen Bauteils (3) bestimmt ist und die mit dem Außengewinde versehene zylindrische Außenfläche (19) aufweist, und wobei die zweite Hülse mit einem zweiten angepaßten Ende (20) versehen ist, um ihr Greifen und ihre drehbare Betätigung zu ermöglichen.

5. Verbindungseinrichtung nach einem der Ansprüche 1 bis 4, dadurch gekennzeichnet, daß der Unterschied zwischen der Dicke (E) der flachen Ringdichtung (5) und der Länge (L) der koaxialen Innenrippe (28) zwischen 0.03 und 0.08 mm beträgt.

6. Verbindungseinrichtung nach einem der Ansprüche 1 bis 5, dadurch gekennzeichnet, daß die Stirnflächen (6, 7) der rohrförmigen Bauteile koaxiale kreisförmige Zwischenrippen (30, 31) aufweisen, deren Durchmesser einen Zwischenwert zwischen dem Durchmesser der Innenrippe (2, 4) der rohrförmigen Bauteile und dem Außendurchmesser der umlaufenden Zentrierzylinder (8, 9) ergibt.

7. Verbindungseinrichtung nach Anspruch 6, dadurch gekennzeichnet, daß die koaxialen kreisförmigen Zwischenrippen (30, 31) der beiden rohrförmigen Bauteile (1, 3) einen im wesentlichen gleichen Durchmesser haben.

8. Verbindungseinrichtung nach Anspruch 6 oder 7, dadurch gekennzeichnet, daß die koaxialen kreisförmigen Zwischenrippen (30, 31) zur Verwendung mit einer metallischen Dichtung eine gleiche Höhe von etwa 0.25 mm haben.

9. Verbindungseinrichtung nach einem der Ansprüche 6 bis 8, dadurch gekennzeichnet, daß die koaxialen kreisförmigen Zwischenrippen (30, 31) einen dreieckförmigen Querschnitt mit abgerundeter Spitze aufweisen.

10. Verbindungseinrichtung nach einem der Ansprüche 1 bis 9, dadurch gekennzeichnet, daß die Zentriermittel der rohrförmigen Bauteile durch die Spannhülse (21) bereitgestellt sind, deren zweite Bohrung (23) sich mit schwachem Spiel an die Seitenflächen (10, 11) der umlaufenden Zentrierzylinder (8, 9) anpaßt.

## Claims

1. Connecting device with a sealing ring for tubular elements, comprising:

– a first tubular element (1) with a longitudinal bore (2) and a second tubular element (3) with a longitudinal bore (4), each tubular element comprising a frontal surface (6, 7) substantially perpendicular to the longitudinal axis (I-I) of the device and forming a joint support, each frontal surface (6, 7) connecting with a peripheral centering cylinder (8, 9), the peripheral centering cylinders having the same diameter, the peripheral centering cylinder (8) of the first tubular element (1) connecting with an external peripheral shoulder (12),

– an external cylindrical threaded surface (19) with an external diameter greater than the external diameter of the peripheral centering cylinders (8, 9), provided on the second tubular element (3),

– a clamping bush (21) comprising two successive axial internal bores (22, 23), the axial internal bores (22, 23) being separated by a radial connecting surface (124) intended to bear against the external peripheral shoulder (12) of the first tubular element (1), the second axial bore (23) comprising a tapped portion (123) operating in conjunction with the threaded portion (19) of the second tubular element,

– a flat annular joint (5) of a thickness E limited by two radial parallel planar surfaces (24, 25) intended to be clamped between the two connecting surfaces (6, 7) of the tubular elements by axial clamping by means of the clamping bush (21), the joint (5) being limited by an internal cylindrical rim (26) whose diameter is greater than the diameter of the internal axial bore (2 , 4) of the tubular elements, and is limited by an external cylindrical rim (27) whose diameter is less than the diameter of the second bore (23) of the clamping bush (21),

– the peripheral centering cylinders (8, 9) and the clamping means (21) ensuring that the tubular elements are secured transversely in accordance with relative coaxial positions, characterised in that:

– one of the two tubular elements (1) comprises, on its connecting surface (6) an internal coaxial rib (28), projecting from said connecting surface (6) axially in the direction of the other of the two tubular elements (3),

– the length (L) of the internal coaxial rib (28) is slightly less than the thickness (E) of the flat annular joint (5),

– one rim of the flat annular joint (5) fits with a small degree of play against a cylindrical surface of the coaxial rib (28), so that the coaxial rib (28) ensures automatic and permanent centering of the flat annular joint (5) with respect to the longitudinal axis of the tubular elements (1, 3), and ensures that the flat annular joint (5) is secured during relative transverse translatory movements of the tubular elements (1, 3), one relative to the other.

2. A connecting device according to Claim 1, characterised in that:

– the internal coaxial rib (28) is limited by an external cylindrical rotary surface (29) whose diameter is less than the internal diameter (26) of joint (5),

– the joint (5) fits with a small degree of play against said external cylindrical face (29) of the rib.

3. A connecting device according to Claim 2, characterised in that the internal diameter (26) of the joint (5) is only very slightly greater than the external diameter (29) of the internal coaxial rib (28).

4. A connecting device according to any one of Claims 1 to 3, characterised in that the second tubular element comprises:

– a tubular member comprising the frontal surface (7) and the peripheral centering cylinder (9), said peripheral centering cylinder (9) connecting with an external peripheral collar (13) which in turn connects with a coaxial cylindrical portion (15) with a smaller diameter,

– a second clamping bush (16) with an axial internal bore (17) fitting against the coaxial external cylindrical portion (15) of the body of the second tubular element (3), the second bush having a frontal surface (18) intended to bear against the external peripheral collar (13) of the second tubular element (3) and comprising the external cylindrical threaded surface (19), the second bush being equipped with a second end (20) shaped in order to enable it to be grasped and rotated.

5. A connecting device according to any one of Claims 1 to 4, characterised in that the difference between the thickness (E) of the flat annular joint (5) and the length (L) of the internal coaxial rib (28) is comprised between 0.03 and 0.08 mm.

6. A connecting device according to any one of Claims 1 to 5, characterised in that the frontal surfaces (6, 7) of the tubular elements comprise intermediate circular coaxial ribs (30, 31) whose diameter is of an intermediate value between the diameter of the internal bores (2, 4) of the tubular elements and the external diameter of the peripheral centering cylinders (8, 9).

7. A connecting device according to Claim 6, characterised in that the respective intermediate coaxial circular ribs (30, 31) of the two tubular elements (1, 3) are of substantially the same diameter.

8. A connecting device according to one of Claims 6 or 7, characterised in that the respective intermediate coaxial circular ribs (30, 31) have a height equal to approximately 0.25 mm for use with a metallic joint.

9. A connecting device according to any one of Claims 6 to 8, characterised in that the respective intermediate coaxial circular ribs (30, 31) have a triangular cross-section with a rounded apex.

10. A connecting device according to any one of Claims 1 to 9, characterised in that the centering means for the tubular elements are constituted by the clamping bush (21) whose second bore (23) fits with a small degree of play on the lateral surfaces (10, 11) of the peripheral centering cylinders (8, 9).

FIG. 1

FIG. 2

I

3

4

19

21

9

7

23

28

5

6

8

2

1

FIG. 3

I